Europäisches Patentamt

European Patent Office

Office européen des brevets

(19)

(11) **EP 0 564 363 B1**

(12) **FASCICULE DE BREVET EUROPEEN**

(45) Date de publication et mention
de la délivrance du brevet:
**22.05.1996 Bulletin 1996/21**

(51) Int Cl.⁶: **F16H 61/06**

(21) Numéro de dépôt: **93400852.5**

(22) Date de dépôt: **02.04.1993**

(54) **Dispositif de pilotage universel de récepteur de boîte automatique**

Universelle Steuereinrichtung für den Verbraucher eines automatischen Getriebes

Universal control device for consumers in automatic gearboxes

(84) Etats contractants désignés:
**DE ES GB IT**

(30) Priorité: **03.04.1992 FR 9204063**

(43) Date de publication de la demande:
**06.10.1993 Bulletin 1993/40**

(73) Titulaire: **REGIE NATIONALE DES USINES RENAULT S.A.**
**F-92109 Boulogne Billancourt (FR)**

(72) Inventeurs:
• **Poupon, Joel**
**F-75011 Paris (FR)**
• **Bremaud, Jean**
**F-78180 Montigny-le-Bretonneux (FR)**
• **Mercier, Jacques**
**F-75015 Paris (FR)**
• **Leorat, François**
**F-78000 Versailles (FR)**

(56) Documents cités:
EP-A- 0 475 488      DE-A- 3 709 133
FR-A- 2 485 650      GB-A- 2 028 937
US-A- 4 930 080      US-A- 5 025 823

• PATENT ABSTRACTS OF JAPAN vol. 015, no. 057 (M-1080)12 Février 1991 & JP-A-22 86 961 (NISSAN ) 27 Novembre 1990 & US-A-5 113 724 (HAYASAKI )
• PATENT ABSTRACTS OF JAPAN vol. 010, no. 122 (M-476)7 Mai 1986 & JP--A60 249 752 (TOYOTA ) 10 Décembre 1985

## Description

L'invention se rapporte au pilotage des boîtes de vitesses automatique à rapports discrets, dont les différents rapports sont obtenus en serrant par des moyens hydrauliques, un ou plusieurs embrayages ou freins, constituant autant de récepteurs hydrauliques de commande des vitesses. Plus précisément, l'invention concerne le pilotage de la montée en pression du récepteur qui est serré lors d'un passage de vitesse.

Dans une boîte de vitesses automatique à arbres parallèles, comportant un couple de pignons pour chaque rapport, la sélection d'un rapport s'effectue en serrant un seul embrayage, dont la fonction est de solidariser un pignon avec l'arbre sur lequel il tourne fou. Le serrage de chaque embrayage sollicité devant être piloté indépendamment de l'état des autres embrayages, on affecte généralement, une électrovanne de modulation de la pression de ligne, à chaque embrayage. Selon ce type de pilotage, il y a donc autant d'électrovannes de modulation de pression, que d'embrayages. En revanche, dans une boîte de vitesses automatique à trains épicycloïdaux, chaque rapport est obtenu par le serrage d'au moins deux récepteurs (embrayages ou freins). Toutefois, dans ces deux types de boîtes de vitesses, les changements de rapports, montants ou descendants, dans l'ordre naturel de passage des vitesses, ou en sautant un ou plusieurs rapports intermédiaires s'effectuent de façon analogue par la manoeuvre de deux récepteurs, ni plus, ni moins, le premier étant relâché, tandis que le second est mis sous pression.

La publication FR-A-2.485.650, au nom de la demanderesse décrit un dispositif de pilotage des récepteurs d'une boîte de vitesses automatique étagée à plusieurs rapports de marche avant à passage sous couple, assurés par l'alimentation sélective en fluide de pression de plusieurs récepteurs, à partir d'une distribution hydraulique délivrant une pression de ligne de façon telle que chaque changement de rapport implique la vidange d'un récepteur et le remplissage d'un autre récepteur, sous le contrôle d'électrovanne de séquence.

Les passages de vitesse montants s'effectuant le plus souvent sous couple, la règle générale étant que la vidange du récepteur relâché au cours du passage est déclenchée lorsque aucun couple ne transite plus par celui-ci. Conformément à la publication EP-A-0.179.683 de la demanderesse, relative à un dispositif de commande d'une transmission automatique à quatre rapports à train épicycloïdal, le déclenchement de la vidange correspond au basculement d'une vanne de coupure. Le basculement de la vanne de coupure est déterminé par un équilibre de pression. Un autre mode de commande de basculement de la vanne de coupure, illustré par la publication EP-A-0.524.066 de la demanderesse, consiste à scruter la vitesse de rotation de l'arbre d'entrée de la transmission à partir du début du passage, et à imposer le basculement, lorsque la dérivée de cette vitesse s'annule postérieurement au début du passage. Dans tous les cas, pour assurer une bonne progressivité du passage, il est indispensable de piloter la montée en pression de remplissage du récepteur qui est serré, à partir du basculement de la vanne de coupure.

La solution proposée par la publication EP-A-0.179.683 de la demanderesse pour contrôler cette montée en pression, consiste à alimenter le récepteur correspondant au travers d'un gicleur, à partir du basculement de la vanne de coupure. Le dispositif correspondant comporte notamment trois vannes de passage, et une vanne de verrouillage et de progressivité, chacune de ces quatre vannes possédant une électrovanne de séquence. Les huit combinaisons possibles des vannes de passage permettent de combiner les positions des trois embrayages et des deux freins contrôlant le train épicycloïdal de la transmission, tandis que le passage de la vanne de progressivité sur une position "petit trou" permet une alimentation progressive des récepteurs : la vanne de progressivité alimente en effet les différents récepteurs hydrauliques de la transmission au travers d'un "gros trou" en position de repos, et au travers d'un "petit trou", en position excitée, de façon à obtenir un remplissage progressif des récepteurs. Chacune des trois vannes de passage et de la vanne de progressivité est commandée par l'électrovanne de séquence correspondante. Selon ce dispositif, le passage en position "petit trou" est simultané au basculement de la vanne de coupure. Le fonctionnement d'un tel dispositif de pilotage est satisfaisant, mais la pratique montre qu'il est préférable de décaler dans le temps le basculement de la vanne de coupure et le début de la phase de remplissage progressif, pour obtenir une bonne progressivité du passage.

Sur une boîte de vitesses automatique à train épicycloïdaux, on peut également envisager, comme dans le cas des boîtes automatiques à arbres parallèles, d'agir directement sur la pression d'alimentation de chaque récepteur. Ce pilotage suppose l'intervention d'une électrovanne modulatrice de pression pour chaque récepteur, et un suivi continu d'une ou plusieurs vitesses des arbres en cause dans la boîte.

Les deux types de solutions qui viennent d'être évoquées souffrent de leur complexité et de leur coût, en raison du nombre important d'organes de commande mis en oeuvre. L'objet de l'invention est précisément de proposer un système de pilotage moins complexe assurant successivement une montée rapide et une montée progressive en pression du récepteur qui est serré lors d'un passage de vitesse.

L'invention concerne un dispositif de pilotage des récepteurs hydrauliques d'une boîte de vitesses automatique étagée à plusieurs rapports de marche avant à passage sous couple, assurés par l'alimentation sélective en fluide de pression, de plusieurs récepteurs, à partir d'un distributeur hydraulique délivrant une pression de ligne selon le rapport imposé par des informations concernant la marche du véhicule, de façon telle que chaque changement de rapport implique la vidange d'un récepteur et le remplissage d'un autre récepteur sous la commande d'électrovannes de séquence. Ce dispositif est caractérisé en ce que l'alimentation de chacun des récepteurs est contrôlée par une vanne de progressivité à deux positions "gros trou plus petit trou" et "petit trou seul", reliée à un absorbeur de débit unique pouvant être raccordé successivement à chaque récepteur pris lors des passages montants.

Selon un mode de réalisation de l'invention, pendant la première phase, ou phase de remplissage rapide du récepteur, celui-ci est alimenté en pression de ligne par l'intermédiaire de sa vanne de séquence, et de la vanne de progressivité, qui assure le passage "gros trou - petit trou".

Selon un mode de réalisation de l'invention, pendant la seconde phase, ou phase de remplissage progressif du récepteur, celui-ci est alimenté en pression de ligne par l'intermédiaire de sa vanne de fréquence, de la vanne de progressivité, et du passage "petit trou", tout en étant raccordé par le passage "gros trou" à l'absorbeur de débit, de façon à ce qu'une partie p du débit parvenant au récepteur soit dirigée vers l'absorbeur de débit.

Selon un mode de réalisation de l'invention, lorsque la pression de fin de passage de vitesse est établie dans le récepteur, son alimentation par le passage "gros trou" est restaurée, tandis que l'absorbeur de débit est mis à la bâche par la mise en position de repos de la vanne de progressivité.

Selon un mode de réalisation de l'invention, la pression de ligne PL est établie pendant toute la durée du passage en fonction du couple transmis par la boîte de vitesses au début de celui-ci.

Selon un mode de réalisation de l'invention, la vanne de progressivité, l'absorbeur de débit et la vanne de séquence sont reliés à au moins deux récepteurs, dont le remplissage assure autant de changements de rapports différents.

L'invention sera mieux comprise à la lecture d'un mode de réalisation particulier de celle-ci, en liaison avec les dessins annexés, sur lesquels :

- les figures 1 à 4 représentent le dispositif de pilotage de l'invention dans quatre états différents, occupés successivement au cours d'un même passage de vitesse.

- la figure 5 illustre l'application de l'invention au pilotage des deux récepteurs.

- la figure 6 illustre l'application de l'invention au pilotage de trois récepteurs.

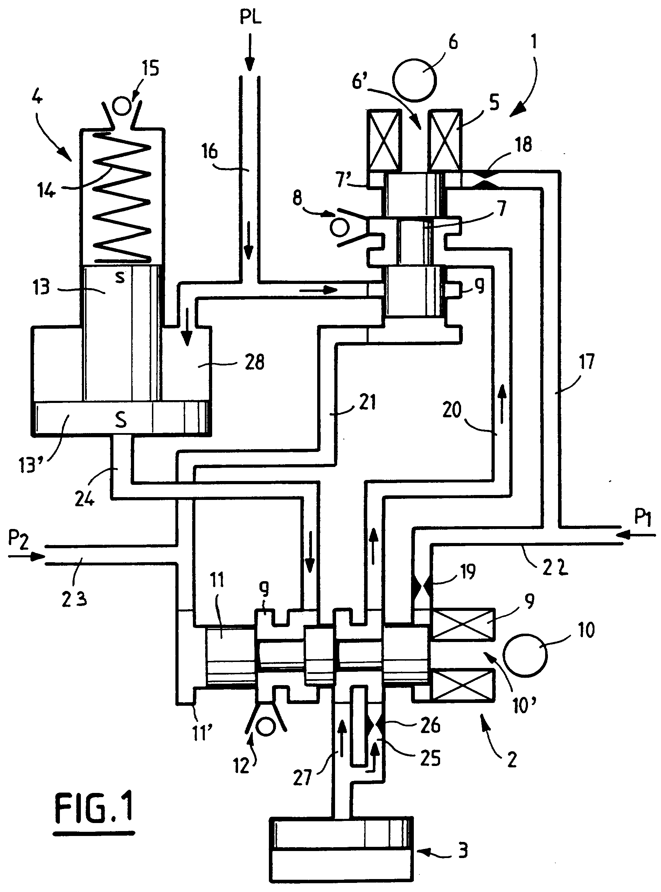

Le dispositif représenté sur les figures 1 à 4 comporte les quatre éléments constitutifs essentiels de l'invention, à savoir une électrovanne de séquence 1 à deux positions, une vanne de progressivité 2 à deux positions, le récepteur hydraulique 3, qui est serré lors du passage de vitesse considéré, et un absorbeur de débit 4. La pression de ligne PL du bloc de commande de la transmission (non représenté) est délivrée par la première conduite d'alimentation 16, tandis qu'une seconde conduite d'alimentation 22 délivre une première pression de commande P1, et qu'une troisième conduite d'alimentation 23 délivre une seconde pression de commande P2. Dans l'exemple de réalisation décrit, on a adopté une pression P1 (par exemple de 3 bar) supérieure à la pression P2 (par exemple de 1,75 bar).

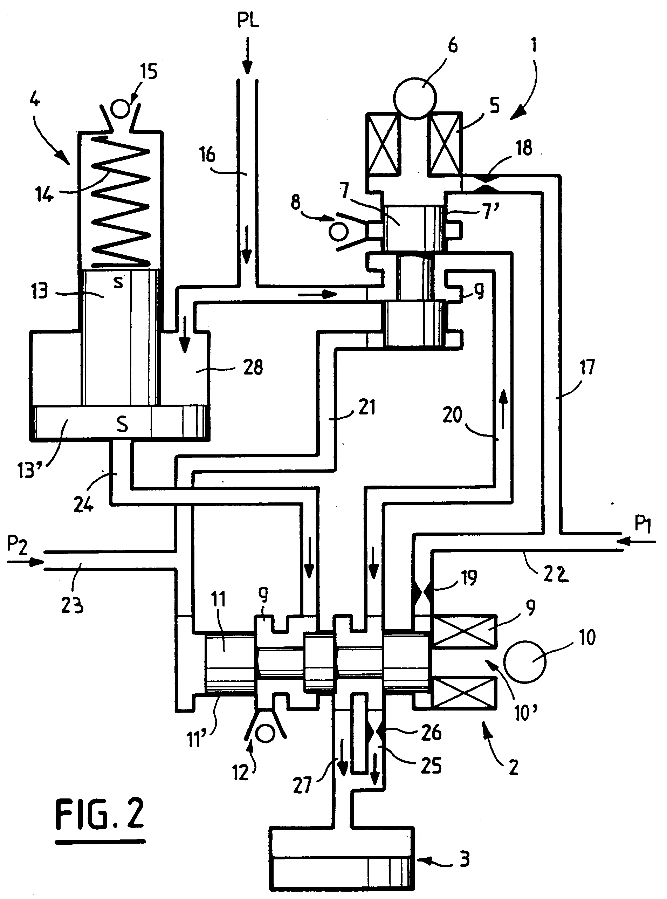

La vanne de séquence 1 comporte de façon classique un tiroir 7, coulissant à l'intérieur d'un corps 7' présentant plusieurs gorges annulaires g, et surmonté d'un électro-aimant 5 associé à une bille 6. Si l'électro-aimant 5, n'est pas excité, la bille 6 est décollée du trou de fuite 6'( voir figure 1). La pression de commande P2 transitant par la conduite 21 tend à repousser en permanence le tiroir 7 vers le haut. L'échappement 8 permet alors la mise à la bâche, du fluide transitant par la conduite 20 dans la situation de la figure 1. Par ailleurs, la pression de commande P1, transitant par la conduite 17 et le gicleur 18, et parvenant au contact du tiroir 7 par l'intermédiaire de la gorge g supérieure est mise à la bâche par l'intermédiaire du trou de fuite 6'. Si au contraire, l'électro-aimant 5 est excité, la bille 6 est attirée vers le bas, fermant ainsi le trou de fuite 6' (voir figures 2, 3 et 4 ). La pression de commande P1 supérieure à P2 repousse le tiroir 7 vers le bas. Le trou de fuite 8 étant alors obturé, la pression de ligne PL, transmise par la conduite 16, transite en direction de la vanne de progressivité 2, par l'intermédiaire des gorges annulaires g médianes, et de la conduite 20.

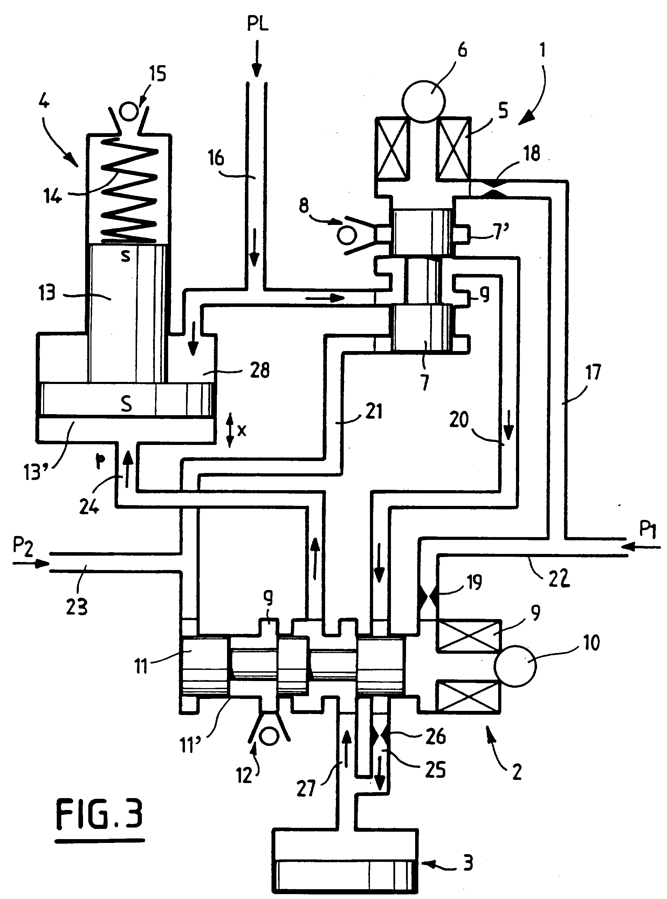

La vanne de progressivité 2 comporte également un électro-aimant 9, une bille 10 et un tiroir 11, coulissant à l'intérieur d'un corps 11' présentant plusieurs gorges annulaires g. Lorsque l'électro-aimant 9 n'est pas excité (figures 1, 2 et 4 ), la bille 10 est décollée de celui-ci. La pression de commande P1 repousse le tiroir 11 vers la droite. Dans cette position, les deux passages 25, 27, assurant le raccordement du récepteur 3, communiquent par l'intermédiaire de deux gorges annulaires g adjacentes avec la conduite 20 reliée à la vanne de séquence 1. Si au contraire, l'électroaimant 9 est excité, le trou de fuite 10' est fermé (voir figure 3). La pression de commande P1, supérieure à la pression de commande P2, repousse le tiroir 11 vers la gauche. Dans cette position, le passage 25 est raccordé à la conduite 20, et le passage 27 est raccordé à la conduite 24 de remplissage de l'absorbeur de débit 4.

L'absorbeur de débit 4 comporte un piston étagé, dont les deux parties 13, 13' sont de sections différentes s < S. Ce piston 13, 13' est repoussé en permanence vers le bas par un ressort de rappel 14. L'extrêmité supérieure de l'absorbeur 4 présente une mise à la bâche 15. Sa chambre annulaire 28 reçoit en permanence la pression de ligne PL qui tend à le repousser vers le bas. Sur les figures 1, 2 et 4, en raison de la position de la vanne de progressivité 1, la conduite 24 assure la mise à la bâche de l'absorbeur 4. Le piston 13, 13' est donc maintenu au fond de la chambre annulaire 28. En revanche sur la figure 3, le déplacement du tiroir 11 établit une communication entre le récepteur 3, et l'absorbeur 4. La pression transmise par la conduite 24 permet de soulever le piston 13, 13' d'une hauteur x dans la chambre 28, à l'encontre de la pression de ligne PL et du ressort 14.

Le fonctionnement de ce dispositif de pilotage va maintenant être décrit, en se référant successivement aux quatre états de ce dispositif, correspondant respectivement aux figures 1, 2, 3 et 4.

La figure 1 correspond à la position initiale du dispositif, c'est à dire à la première partie du passage de vitesse, avant que le récepteur 3, destiné à être serré, ne soit sollicité. Dans cette situation, la vanne de séquence 1 et la vanne de progressivité 2 ne sont pas excitées. La pression de ligne PL n'est pas transmise au récepteur 3, qui est mis à la bâche par l'intermédiaire de la conduite 20 et du trou de fuite 8. L'état relâché du récepteur 3 est illustré sur le schéma par sa position haute. Par ailleurs, l'absorbeur de débit 4 est en position basse sous l'action conjuguée du ressort 14 et de la pression de ligne PL, sa face inférieure étant mise à la bâche par l'intermédiaire de la conduite 24, de la vanne de progressivité 2, et du trou de fuite 12.

La figure 2 correspond à la première phase du remplissage du récepteur 3, pendant la quelle la montée en pression du récepteur 3 est rapide, et s'effectue sans être modulée par l'absorbeur de débit 4. La vanne de progressivité 2 est toujours dans un état de non excitation, tandis que la vanne de séquence 1 est excitée. La pression de ligne PL transite par l'électrovanne de séquence 1, la conduite 17, la vanne de progressivité 2, le passage "gros trou" 27, et le passage "petit trou" 26, présentant un gicleur 26. Enfin, il faut noter que la position de l'absorbeur 4 n'a pas changée par rapport à la figure 1.

La figure 3 se rapporte à la seconde phase, ou phase de montée progressive en pression du récepteur 3. L'état du dispositif au cours de cette phase se différencie du précédent par le fait que la vanne de progressivité 2 est excitée. Dans cette nouvelle situation, le récepteur 3 est toujours alimenté par la pression de ligne PL, mais le déplacement du tiroir 11 fait que l'alimentation au travers du passage "gros trou" 27 est interrompue. Par ailleurs, le basculement de la vanne de progressivité 2 a eu pour autre conséquence d'interrompre la mise à la bâche du récepteur 3 et d'avoir établi une communication entre le récepteur 3 et l'absorbeur de débit 4, par le passage "gros trou" 27. Sollicité par une pression p, le piston 13, 13' est susceptible de se déplacer vers le haut d'une hauteur x à l'encontre de la pression de ligne PL et du ressort 14.

Sachant que l'effort F exercé par le ressort 14 et la pression de ligne PL, sur le piston 13, 13' se décompose de la façon suivante :

$$F = pS = F_o + Kx + P(S - s)$$

$F_o$ étant le tarage initial du ressort, K sa raideur, x étant le déplacement du piston, s et S étant les sections des deux parties 13 et 13' du piston, P étant la valeur de la pression de ligne et p étant la valeur instantanée de la pression en aval du gicleur 26. Par ailleurs, on sait que le débit de restitution Q au travers du gicleur 26 est établi de la façon suivante :

$$Q = \alpha \, \sigma \, \sqrt{P - p} = S \frac{dx}{dt}$$

$\sigma$ étant la section du gicleur et $\alpha$ un coefficient caractéristique de la morphologie du gicleur. Un choix judicieux des sections s et S, du tarage initial du ressort, $F_o$ de sa raideur K et de la section du gicleur $\sigma$ ,permet d'obtenir la loi souhaitée de la montée en pression du récepteur 3.

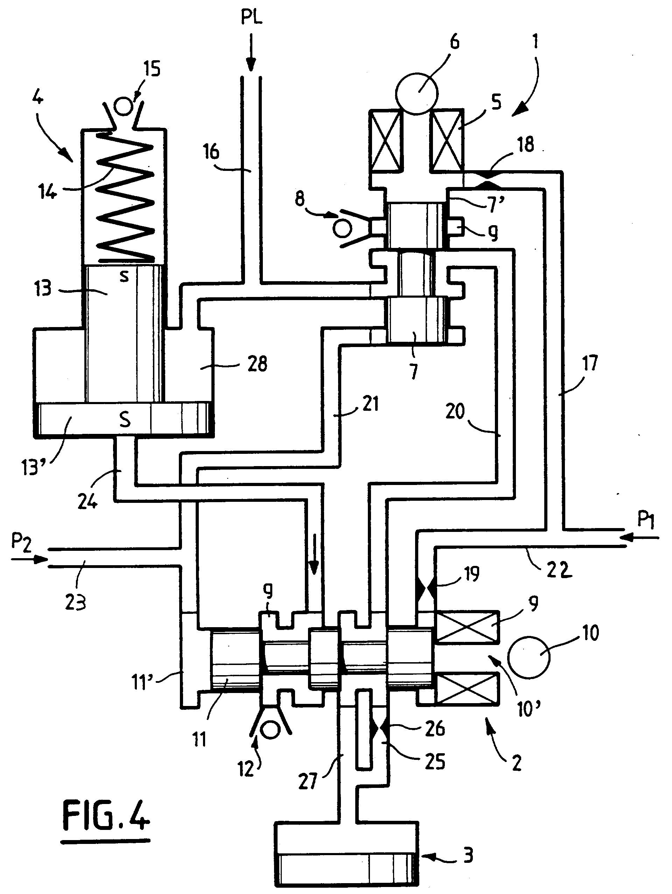

La figure 4 correspond à l'état du dispositif, lorsque la pression de fin de passage est établie dans le récepteur 3. Dans cette situation, la vanne de progressivité 2 n'est plus excitée. L'alimentation du récepteur 3 par le passage "gros trou" 27 est donc rétablie, tandis que l'absorbeur de débit 4 est de nouveau à la bâche, afin d'être prêt à resservir pour un autre passage de vitesse.

Sur les figures 1 à 4, la vanne de séquence 1 et la vanne de progressivité 2 sont intégrées dans un circuit correspondant au mode de réalisation particulier de l'invention qui vient d'être décrit. Par ailleurs, sur ces figures, la vanne de progressivité 2 n' est reliée qu'à un seul récepteur 3. En reproduisant sa structure, c'est à dire en augmentant le nombre de ses gorges annulaires g, il est possible de la raccorder à plusieurs récepteurs 3 associés à autant d'électrovannes de séquence 1, de façon à ce qu'elle exerce la même fonction pour tous les changements de rapport.

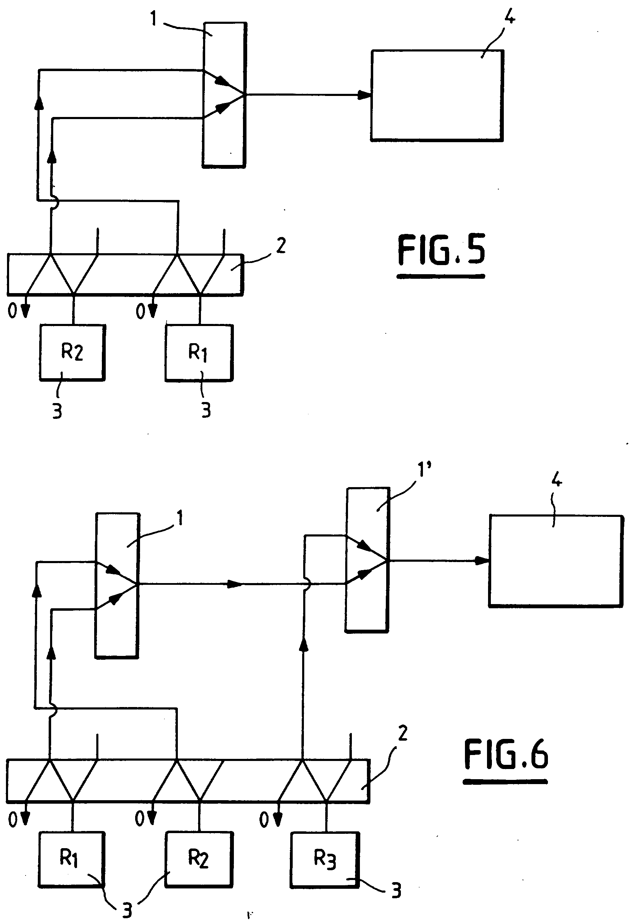

Comme on vient le voir, l'absorbeur de débit est remis à la bâche lorsque le passage est établi. Il peut donc être utilisé lors d'un autre passage montant utilisant un récepteur différent, la discrimination des circuits venant de la ou des vannes de progressivité, s'effectuant à travers les vannes de séquence correspondant auxdits récepteurs. Le schéma de la figure 5 illustre l'application de ce principe à l'alimentation de deux récepteurs 3 ($R_1$, $R_2$) associés à une vanne de progressivité 2, à une vanne de séquence 1 et à un seul absorbeur de débit 4. Conformément à l'invention, un tel montage permet, grâce aux basculements de la vanne de progressivité 2 et de la vanne de séquence 1, de contrôler deux passages de vitesses montants distincts.

Enfin, selon le schéma de la figure 6, illustrant l'application du même principe à l'alimentation de trois récepteurs 3 ($R_1$, $R_2$, $R_3$) associés au même absorbeur de débit 4, la combinaison des basculements respectifs de la vanne de progressivité 2 et de deux vannes de séquence 1 et 1', permet de piloter trois passages montants distincts.

Si on compare le dispositif de pilotage de l'invention aux dispositifs connus de pilotage de montée en pression de récepteur hydraulique de boîtes automatiques, on peut faire les observations suivantes. Comme indiqué plus haut, le pilotage direct de la montée en pression des récepteurs lors des passage de vitesses nécessite obligatoirement la présence de plusieurs électrovannes modulatrices (une par récepteur). Par ailleurs le dispositif de commande hydraulique décrit dans la publication EP 179 683, de la demanderesse n'utilise qu'une seule électrovanne modulatrice, mais nécessite l'intervention d'au moins une électrovanne de progressivité, de plusieurs électrovannes de séquence, de trois vannes de coupure, et d'un accumulateur ou absorbeur de débit, En revanche, le dispositif de l'invention offre les mêmes possibilités de fonctionnement en n'impliquant dans le pilotage qu'une seule électrovanne de modulation, une vanne de séquence par récepteur, une vanne de progressivité, et un absorbeur de débit.

En conclusion, la présente invention permet d'optimiser la commande hydraulique des boîtes de changement de vitesses automatiques à arbres parallèles ou à trains épicycloïdaux, en réduisant le nombre d'organes de commande hydraulique nécessaires. Cette disposition est à la fois économique, puisque les électrovannes de modulation de pression sont des éléments coûteux, et rationnelle, en raison de la réduction du nombre des branchements et de la simplification du circuit de commande qui en résulte.

## Revendications

1. Dispositif de pilotage des récepteurs hydrauliques (3) d'une boîte de vitesses automatique étagée à plusieurs rapports de marche avant à passage sous couple, assurés par l'alimentation sélective en fluide de pression, de plusieurs récepteurs (3), à partir d'un distributeur hydraulique délivrant une pression de ligne (PL) selon le rapport imposé par des informations concernant la marche du véhicule, de façon telle que chaque changement de rapport implique la vidange d'un récepteur (3) et le remplissage d'un autre récepteur sous la commande d'électrovannes de séquence (1), caractérisé en ce que l'alimentation de chacun des récepteurs (3) est contrôlée par une vanne de progressivité (2) à deux positions "gros trou plus petit trou" (25, 27) et "petit trou" (25) seul, reliée à un absorbeur de débit (4) unique pouvant être raccordé successivement à chaque récepteur (3), pris lors des passages montants.

2. Dispositif de pilotage selon la revendication 1, caractérisé en ce que pendant la première phase, ou phase de remplissage rapide du récepteur (3), celui-ci est alimenté en pression de ligne par l'intermédiaire de sa vanne de séquence (1), et de la vanne de progressivité (2), qui assure le passage "gros trou" (27) - "petit trou" (25).

3. Dispositif de pilotage selon les revendications 1 ou 2, caractérisé en ce que pendant la seconde phase, ou phase de remplissage progressif du récepteur (3), celui-ci est alimenté en pression de ligne (PL) par l'intermédiaire de sa vanne de séquence (1), de la vanne de progressivité (2), et du passage "petit trou" (25), tout en étant raccordé par le passage "gros trou" (27) à l'absorbeur du débit (4), de façon à ce qu'une partie p du débit parvenant au récepteur (3) soit dirigée vers l'absorbeur de débit (4).

4. Dispositif de pilotage selon les revendications 1, 2 ou 3, caractérisé en ce que, lorsque la pression de fin de passage de vitesse est établie dans le récepteur (3), son alimentation par le passage "gros trou" (27) restaurée, tandis que l'absorbeur de débit (4) est mis à la bâche par la mise en position de repos de la vanne de progressivité (2).

5. Dispositif de pilotage selon l'une quelconque des revendications précédentes, caractérisé en ce que la pression de ligne PL est établie pendant toute la durée du passage en fonction du couple transmis par la boîte de vitesses au début de celui-ci.

6. Dispositif de pilotage selon l'une quelconque des revendications précédentes, caractérisé en ce qu'il comporte deux récepteurs $R_1$, $R_2$, et en ce que l'absorbeur de débit (4) est relié par l'intermédiaire de la vanne de séquence (1) et de la vanne de progressivité (2) à l'un ou l'autre des récepteurs $R_1$ ou $R_2$ selon la position de ladite vanne de séquence.

7. Dispositif de pilotage selon l'une quelconque des revendications 1 à 5, caractérisé en ce qu'il comporte trois récepteurs $R_1$, $R_2$, $R_3$, et deux vannes de séquence (1), et en ce que l'absorbeur de débit (4) est relié par l'intermédiaire des vannes de séquence (1, 1') et de la vanne de progressivité (2) à l'un ou l'autre des récepteurs $R_1$, $R_2$ ou $R_3$ selon les dispositions des vannes 1 et 1'.

## Patentansprüche

1. Steuereinrichtung für die hydraulischen Behälter (3) eines automatischen StufengetrieDes mit mehreren Vorwärtsgängen, die unter Belastung schaltbar sind mittels selektiver Versorgung mit Druckfluid mehrerer Behälter (3), ausgehend von einem hydraulischen Verteiler, der einen Leitungsdruck PL entsprechend dem Gang zur Verfügung stellt, der durch die die Fahrt des Fahrzeugs betreffenden Informationen bestimmt ist, derart, daß jeder Gangwechsel die Leerung eines Behälters (3) sowie die Füllung eines anderen Behälters bedingt unter der Steuerung von elektrischen Folgeventilen (1), dadurch gekennzeichnet, daß die Versorgung eines jeden Behälters (3) gesteuert wird durch ein Ventil für die Progressivität (2) mit zwei Stellungen "große Öffnung und kleine Öffnung" (25, 27) und nur "kleine Öffnung" (25), das mit einem einzigen Mengenaufnehmer (4) verbunden ist, der nacheinander mit allen Behältern (3), die während der aufsteigenden Gangwechsel zugeschaltet werden, verbindbar ist.

2. Steuereinrichtung nach Anspruch 1, dadurch gekennzeichnet, daß während der ersten Phase oder schnellen Füllphase des Behälters (3) dieser mit einem Leitungsdruck über sein Folgeventil (1) und das Ventil für die Progressivität (2) beaufschlagt wird, welches den Durchlaß "große Öffnung" (27) - "kleine Öffnung" (25) ermöglicht.

3. Steuereinrichtung nach Ansprüche 1 oder 2, dadurch gekennzeichnet, daß während der zweiten Phase oder der zunehmenden Füllphase des Behälters (3) dieser mit dem Leitungsdruck (PL) beaufschlagt wird über sein Folgeventil (1), das Ventil für die Progressivität (2) und den Durchlaß "kleine Öffnung" (25), wobei er zugleich über den Durchlaß "große Öffnung" (27) mit dem Mengenaufnehmer (4) derart in Verbindung steht, daß ein Teil p der dem Behälter (3) zur Verfügung stehenden Menge in Richtung des Mengenaufnehmers (4) abgeleitet wird.

4. Steuereinrichtung nach Ansprüchen 1, 2 oder 3, dadurch gekennzeichnet, daß wenn der Enddruck für den Gangwechsel im Behälter (3) aufgebaut worden ist, dessen Versorgung durch den Durchlaß "große Öffnung" (27) wieder hergestellt wird, während der Mengenaufnehmer (4) mit dem Sammelbehälter durch das Einnehmen der Ruhestellung des Ventils für die Progressivität (2) verbunden wird.

5. Steuereinrichtung nach einem der vorhergehenden Ansprüche, dadurch gekennzeichnet, daß der Leitungsdruck PL während der gesamten Schaltdauer als Funktion des anfangs vom Getriebe übertragenen Drehmomentes erzeugt wird.

6. Steuereinrichtung nach einem der vorhergehenden Ansprüche, dadurch gekennzeichnet, daß sie zwei Behälter $R_1$, $R_2$ aufweist und daß der Mengenaufnehmer (4) über das Folgeventil (1) und das Ventil für die Progressivität (2) mit dem einen oder dem anderen der Behälter $R_1$ oder $R_2$ entsprechend der Stellung des Folgeventils verbunden ist.

7. Steuereinrichtung nach einem der Ansprüche 1 bis 5, dadurch gekennzeichnet, daß sie drei Behälter $R_1$, $R_2$, $R_3$ aufweist sowie zwei Folgeventile (1), und daß der Mengenaufnehmer (4) über die Folgeventile (1, 1') und das Ventil für die Progressivität (2) mit einem der drei Behälter $R_1$, $R_2$ oder $R_3$ je nach den Stellungen der Ventile 1 und 1' verbunden ist.

## Claims

1. An apparatus for controlling hydraulic receptors (3) in an automatic gearbox with a plurality of forward gears which change under torque, effected by selective supply of pressurised fluid to a plurality of receptors (3) from a hydraulic distributor delivering a line pressure (PL) which depends on the gear dictated by information concerning the motion of the vehicle, such that each gear change empties one receptor (3) and fills a further receptor, under the control of sequence solenoid valves (1), characterized in that the supply of each receptor (3) is controlled by a progressivity valve (2) with two positions: "fast hole plus slow hole" (25, 27) and "slow hole only" (25), connected to a single flow absorber (4) which can be connected successively to each receptor (3) during upshifts.

2. A control apparatus according to claim 1, characterized in that during the first phase or rapid filling phase for the receptor (3), the receptor is supplied with line pressure via its sequence valve (1), and the progressivity valve (2) which provides the "fast hole" (27) - "slow hole" (25) passage.

3. A control apparatus according to claims 1 or 2, characterized in that during the second phase or progressive filling phase for receptor (3), the receptor is supplied by line pressure (PL) via its sequence valve (1), the progressivity valve (2) and the "slow hole" passage (25), and at the same time is connected via the "fast hole" (27) passage to the flow absorber (4) such that a portion p of the flow reaching receptor (3) is directed towards the flow absorber (4).

4. A control apparatus according to claims 1, 2 or 3, characterized in that when the end pressure of the gear shift is established in the receptor (3), with its supply via the "fast hole" passage (27) restored, the flow absorber (4) is discharged to the sump by the progressivity valve (2) being moved to the rest position.

5. A control apparatus according to any one of the preceding claims, characterized in that the line pressure PL is established over the whole of the gearshift period and depends on the torque transmitted by the gearbox at the start thereof.

6. A control apparatus according to any one of the preceding claims, characterized in that it comprises

two receptors $R_1$, $R_2$, and in that the flow absorber (4) is connected via the sequence valve (1) and the progressivity valve (2) to one or other of receptors $R_1$ or $R_2$ depending on the position of the sequence valve.

7. A control apparatus according to any one of claims 1 to 5, characterized in that it comprises three receptors $R_1$, $R_2$, $R_3$, and two sequence valves (1), and in that the flow absorber (4) is connected via sequence valves (1, 1') and the progressivity valve (2) to one or other of the receptors $R_1$, $R_2$ or $R_3$ depending on the positions of valves 1 and 1'.

**FIG.1**

## FIG.2

**FIG.3**

FIG.4

FIG.5

FIG.6